# EUROPEAN PATENT APPLICATION

(11) **EP 4 737 973 A1**
(43) Date of publication of application: **06.05.2026**
(21) Application number: 23943239.6
(22) Date of filing: 24.10.2023
(51) Int. Cl.: G02B 17/08

(54) **OPTICAL MODULE AND HEAD-MOUNTED DISPLAY DEVICE**

(30) Priority: 29.06.2023 CN 202310785996
(71) Applicant: Goertek Optical Technology Co., Ltd., Weifang, Shandong 261031 (CN)
(72) Inventor: SONG, Wenbao, Weifang, Shandong 261031 (CN)
(74) Representative: ABG Intellectual Property Law, S.L.
(86) International application number: PCT/CN2023/126082
(87) International publication number: WO 2025/000760

(57) **Abstract**

Embodiments of the present application provide an optical module and a head-mounted display device. The optical module comprises a lens group, and a light splitting element, a first phase retarder and a polarization reflector which are arranged between light paths of the lens group, and the first phase retarder is located between the light splitting element and the polarization reflector. The lens group is composed of a first lens and a second lens which are cemented with each other, and the first lens and the second lens are adjacently arranged along the same optical axis; and a ratio H/T₂ of the sag H of the surface of the second lens facing away from the first lens to the center thickness T₂ of the second lens satisfies: 0.38≤H/T₂≤0.82. The optical module provided by the embodiments of the present application has the characteristics of a small total track length and good imaging quality.

## Description

### Technical Field

An embodiment of the present application relates to a technical field of optical imaging, and more specifically, to an optical module and a head-mounted display device.

### Description of Related Art

A core component of the virtual reality technology is an optical module disposed therein, and the effect of the displayed image directly determines the quality of virtual reality products. As people's requirements for the comfort of wearing virtual reality products become increasingly higher, design requirements for lightening and thinning virtual reality products are put forward. However, the existing optical module applied in the virtual reality product cannot meet the requirement of considering the imaging quality in the case of a small volume. In order to ensure the imaging quality, it is impossible to achieve a miniaturized optical module design.

### SUMMARY

An objective of the present application is to provide a new technical solution of an optical module and a head-mounted display device, which has the characteristics of small total length and good imaging image quality of the optical module.

According to a first aspect, the present application provides an optical module. The optical module includes a lens group, and a light splitting element, a first phase retarder and a polarization reflector disposed between optical paths of the lens group, wherein the first phase retarder is located between the light splitting element and the polarization reflector;
wherein the lens group includes a first lens and a second lens adhered to each other, and the first lens and the second lens are arranged adjacent to each other along a same optical axis;
a ratio H/T₂ of a sagittal height H of a surface of the second lens away from the first lens to a center thickness T₂ of the second lens satisfies: 0.38≤ H/T₂ ≤ 0.82.

Optionally, a surface of the second lens adjacent to the first lens is a concave surface or a reverse curved surface;
a surface of the first lens adjacent to the second lens is a convex surface or a reverse curved surface.

Optionally, a surface of the second lens away from the first lens is a convex surface.

Optionally, the optical module further includes a display screen, the display screen is located on a side of the second lens away from the first lens, and a ratio T₂/L of a center thickness T₂ of the second lens to an aperture L of a light emitting region of the display screen satisfies: 0.2≤ T₂/L ≤ 0.5.

Optionally, a total length TTL of the optical module is less than 25 mm, and a MTF (modulation transfer function) value of the optical module is greater than 0.5.

Optionally, an effective focal length of the optical module is 13 mm to 23 mm.

Optionally, the light splitting element is disposed on a surface of the second lens close to the display screen;
the first phase retarder is disposed on a surface of the second lens away from the display screen, and the polarization reflector is stacked on a side of the first phase retarder away from the second lens.

Optionally, the optical module further includes a first polarizer disposed on a side of the polarization reflector away from the first phase retarder; and
the first polarizer is adhered to the first lens through an adhesive layer.

Optionally, the display screen is configured to be capable of emitting a circularly polarized light or a natural light;
when a light emitted by the display screen is the natural light, a second polarizer is disposed on a light emitting surface of the display screen, a second phase retarder is stacked on a side of the second polarizer away from the display screen, and the second polarizer and the second phase retarder form a stacked element to convert the natural light into the circularly polarized light.

Optionally, the light splitting element is located between the first phase retarder and the second phase retarder.

According to a second aspect, the present application provides a head-mounted display device. The head-mounted display device includes:
a housing; and
the optical module according to the first aspect.

The beneficial effects of the present application are as below:
the optical module provided in the embodiment of the present application is a folded optical path solution, the optical module has a cemented lens group, and the cemented lens group includes two lenses. By designing the surface shape and center thickness parameters of the second lens, the total length of the optical module can be reduced while also considering the image quality of the imaging.

Other features and advantages of the specification will become apparent from the following detailed description of exemplary embodiments of the specification with reference to the accompanying drawings.

### BRIEF DESCRIPTION OF DRAWINGS

The accompanying drawings, which are incorporated in and constitute a part of the specification, illustrate embodiments of the specification and, together with the description, serve to explain the principles of the specification.
FIG. 1 is a schematic structural diagram of an optical module according to an embodiment of the present application;
FIG. 2 is a first MTF (modulation transfer function) curve of the optical module shown in FIG. 1;
FIG. 3 is a second MTF curve of the optical module shown in FIG. 1;
FIG. 4 is a third MTF curve of the optical module shown in FIG. 1;
FIG. 5 is a schematic structural diagram of an optical module according to another embodiment of the present application;
FIG. 6 is a first MTF (modulation transfer function) curve of the optical module shown in FIG. 5;
FIG. 7 is a second MTF curve of the optical module shown in FIG. 5;
FIG. 8 is a third MTF curve of the optical module shown in FIG. 5;
FIG. 9 is a schematic structural diagram of an optical module according to still another embodiment of the present application;
FIG. 10 is a first MTF (modulation transfer function) curve of the optical module shown in FIG. 9;
FIG. 11 is a second MTF curve of the optical module shown in FIG. 9;
FIG. 12 is a third MTF curve of the optical module shown in FIG. 9.

### Description of reference numerals:

1: optical axis; 2: diaphragm; 3: first lens; 4: second lens; 5: display screen; 6: light; 7: adhesive layer; 8: first polarizer; 9: polarization reflector; 10: first phase retarder; 11: light splitting element; 12: second phase retarder; 13: second polarizer.

### DETAILED DESCRIPTIONS

Various exemplary embodiments of the present application will now be described in detail with reference to the accompanying drawings. It should be noted that the relative arrangement of components and steps, numerical expressions and numerical values set forth in these embodiments do not limit the scope of the present application unless specifically stated otherwise.

The following description of at least one exemplary embodiment is merely illustrative in nature and is in no way intended to limit the present application, its application, or uses.

Techniques and devices known to those of ordinary skill in the relevant art may not be discussed in detail, but where appropriate, the techniques and devices should be considered as a part of the specification.

In all of the examples shown and discussed herein, any particular value should be interpreted as illustrative only, and not as a limitation. Accordingly, other examples of exemplary embodiments may have different values.

It should be noted that similar reference numerals and letters indicate similar items in the following drawings, and therefore, once an item is defined in one drawing, it does not need to be further discussed in subsequent drawings.

The following describes an optical module and a head-mounted display device provided in embodiments of the present application in detail with reference to the drawings.

According to an aspect of the embodiments of the present application, an optical module is provided, and the optical module may be applicable to a wearable device. The wearable device is, for example, a head mounted display (HMD), such as a VR head mounted display device. The VR head-mounted display device includes, for example, VR smart glasses or a VR smart helmet, which is not limited in the embodiments of the present application.

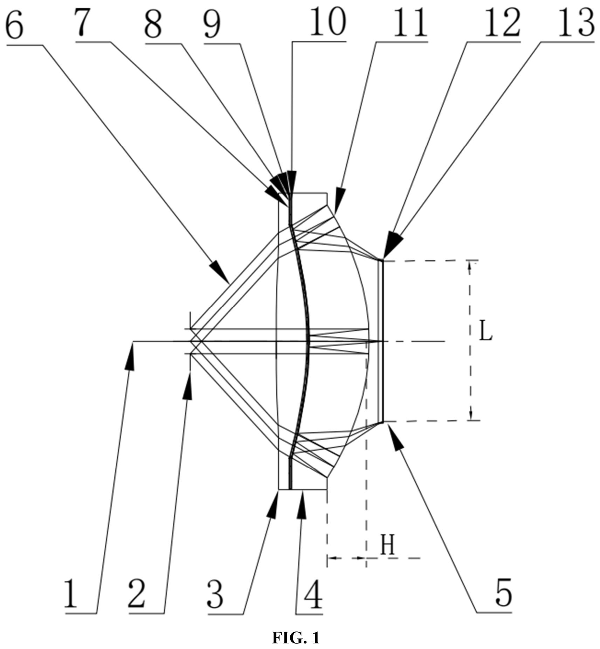

Referring to FIGS. 1, 5, and 9, an optical module provided in an embodiment of the present application includes a lens group, and a light splitting element 11, a first phase retarder 10 and a polarization reflector 9 disposed between optical paths of the lens group, and the first phase retarder 10 is located between the light splitting element 11 and the polarization reflector 9. The lens group includes a first lens 3 and a second lens 4 that are adhered to each other, and the first lens 3 and the second lens 4 are disposed adjacent to each other along a same optical axis 1, and a ratio H/T₂ of a sagittal height H of a surface of the second lens 4 away from the first lens 3 to a center thickness T₂ of the second lens 4 satisfies: 0.38≤ H/T₂ ≤ 0.82.

The optical module provided according to the foregoing embodiment of the present application is an optical module based on a folded optical path (pancake), and the optical module can be applied to virtual reality products such as VR products.

According to the optical module provided in the foregoing embodiment, a cemented lens group including two lenses is introduced into the optical module, that is, the first lens 3 and the second lens 4 are adhered to each other to form a lens group. The design of the two cemented lenses is conducive to reducing the total length of the optical module. In addition, to achieve good imaging quality, in the present application, a ratio H/T₂ of the sagittal height H of a surface of the second lens 4 away from the first lens 3 to the center thickness T₂ of the second lens 4 further satisfies: 0.38≤ H/T₂ ≤ 0.82. In this way, good image quality can be considered while ensuring a small total length of the optical module.

When the ratio H/T₂ of the sagittal height H of the surface of the second lens 4 away from the first lens 3 to the center thickness T₂ of the second lens 4 is less than 0.38 or greater than 0.82, the image quality of imaging cannot be taken into account, that is, the image quality will be degraded.

The optical module provided by the embodiment of the present application is beneficial to realize that a virtual reality display device, such as a VR device, can meet the requirement for high imaging quality in a small size. The compact size based on the optical module can allow for relatively small designs, which can realize the lightening and thinning of the virtual reality display device, is more suitable for users to wear and use, can improve the wearing comfort, and will not be fatigued for a long time.

According to the optical module provided in the embodiment of the present application, the optical module is a folded optical path solution, the optical module has a cemented lens group, the cemented lens group includes two lenses, and by designing the surface shape and the center thickness parameter of the second lens 4 in the cemented lens group, the total length of the optical module can be reduced, and image quality of imaging can also be considered. For example, referring to FIG. 1, the second lens 4 is close to a display screen 5.

The optical module provided in the embodiment of the present application is a folded optical path, and in addition to the lens group, the optical module further includes optical elements such as a light splitting element 11, a first phase retarder 10 and a polarization reflector 9 that are configured to form the folded optical path. These optical elements (optical films) can be used to form a folded light path in the lens group, so that the light can be turned back in the lens group to extend the propagation path of the light, which is beneficial to the final clear imaging, and is beneficial to reducing the size of the entire optical module.

The light splitting element 11 can transmit a part of light and reflect another part of light.

The light splitting element 11 is, for example, a transflective film.

Optionally, the light splitting element 11 has a reflectivity of 47% to 53%.

It should be noted that the reflectivity and transmittance of the light splitting element 11 may be flexibly adjusted according to specific needs, which is not limited in the embodiments of the present application.

The first phase retarder 10 is, for example, a quarter-wave plate.

Of course, the first phase retarder 10 herein may also be set as other phase retarders such as a half-wave plate as required.

In the optical module provided in the embodiment of the present application, in a folded optical path located on a side close to the diaphragm 2, the first phase retarder 10 may be disposed to change a polarization state of light. For example, it is used to convert a linearly polarized light into a circularly polarized light, or convert the circularly polarized light into the linearly polarized light.

The polarization reflector 9 is, for example, a linear polarizer, which is a polarization reflector that reflects a horizontal linearly polarized light and transmits a vertical linearly polarized light, or a polarization reflector that reflects the linearly polarized light at any specific angle and transmits the linearly polarized light perpendicular to the angle.

In the embodiment of the present application, the first phase retarder 10 and the polarization reflector 9 cooperate with each other, to analyze and transmit the light.

It should be emphasized that the optical elements such as the light splitting element 11, the first phase retarder 10, and the polarization reflector 9 may form a folded optical path in the lens group on a side close to the diaphragm 2, and arrangement positions of the optical elements are relatively flexible, but it should be ensured that the first phase retarder 10 is located between the light splitting element 11 and the polarization reflector 9.

In some examples of the present application, referring to FIG. 1, FIG. 5 and FIG. 9, a surface of the second lens 4 adjacent to the first lens 3 is a concave surface or a reverse curved surface. A surface of the first lens 3 adjacent to the second lens 4 is a convex surface or a reverse curved surface.

According to the foregoing example, two adjacent surfaces of the first lens 3 and the second lens 4 need to be cemented, and the cemented surfaces of the first lens 3 and the second lens 4 are designed to be in a concave-convex fit or a reverse curved fit, which is conducive to the cemented assembly between the two.

In some examples of the present application, referring to FIGS. 1, 5 and 9, a surface of the second lens 4 away from the first lens 3 is a convex surface.

In the optical module provided in the embodiment of the present application, the second lens 4 is close to the display screen 5, and since the lens group in the entire optical module is formed by gluing only the first lens 3 and the second lens 4, the second lens 4 is the first lens close to the display screen 5, and a surface of the second lens 4 away from the first lens 3 is a surface of the second lens 4 close to the display screen 5, and designing this surface as a convex surface can converge and magnify light, which is beneficial for improving light efficiency and imaging clarity.

In some examples of the present application, referring to FIGS. 1, 5, and 9, the optical module further includes a display screen 5, the display screen 5 is located on a side of the second lens 4 away from the first lens 3, and a ratio T₂/L of a center thickness T₂ of the second lens 4 to an aperture L of a light emitting region of the display screen 5 satisfies: 0.2≤ T₂/L ≤ 0.5.

According to the foregoing example, the ratio of the center thickness T₂ of the second lens 4 to the aperture L of the light emitting region of the display screen 5 is designed, and when this ratio is within the range in the above example, the total length of the optical module can be further reduced, and the image quality of the optical module can be improved.

The display screen 5 may be in a rectangular or square shape.

When the display screen 5 is in a rectangular shape, the aperture L of the light emitting region of the display screen 5 is any one of a length of a long side or a short side. When the display screen 5 is in a square shape, the aperture L of the light emitting region of the display screen 5 is a side length of the square.

In some examples of the present application, the total length TTL of the optical module is less than 25 mm, and the MTF value of the optical module is greater than 0.5.

As a preferred embodiment of the present application, the total length TTL of the optical module may be 15 mm to 18 mm.

For example, the total length TTL of the optical module may be only 17 mm, and good image quality can also be considered on this basis.

In some examples of the present application, an effective focal length of the optical module is 13 mm to 23 mm.

According to the foregoing example, the optical module provided in the embodiment of the present application implements short-focus imaging based on two cemented lenses. The total length of the entire optical module is also short, and good image quality is also considered.

In some examples of the present application, referring to FIGS. 1, 5, and 9, the light splitting element 11 is disposed on a surface of the second lens 4 close to the display screen 5, the first phase retarder 10 is disposed on a surface of the second lens 4 away from the display screen 5, and the polarization reflector 9 is stacked on a side of the first phase retarder 10 away from the second lens 4.

In the optical module provided in the embodiment of the present application, the lens group is a cemented lens group formed by gluing two lenses, and to facilitate assembly of the light splitting element 11, the first phase retarder 10, and the polarization reflector 9 that form the folded optical path in the optical module, they may be directly mounted on the lens.

The light splitting element 11 is, for example, a quarter-wave plate, which can be directly mounted on a non-cemented surface of the second lens 4. The first phase retarder 10 and the polarization reflector 9 may be designed to be stacked to form a composite film sheet and sandwiched between the second lens 4 and the first lens 3. In this way, the entire optical framework is also compact.

An included angle between a transmission axis direction of the polarization reflector 9 and a fast axis or a slow axis of the first phase retarder 10 is positive 45°. The first phase retarder 10 and the polarization reflector 9 cooperate with each other and can be used to analyze and transmit the light.

According to the foregoing example, the polarization reflector 9 and the first phase retarder 10 are disposed on a same side of the second lens 4, to facilitate alignment adjustment between the two.

In some examples of the present application, referring to FIGS. 1, 5, and 9, the optical module further includes a first polarizer 8, the first polarizer 8 is disposed on a side of the polarization reflector 9 away from the first phase retarder 10, and the first polarizer 8 is adhered to the first lens 3 by using an adhesive layer 7.

According to the foregoing example, the introduction of the first polarizer 8 may reduce stray light.

The first polarizer 8, the polarization reflector 9, and the first phase retarder 10 may be sequentially cemented and stacked to form a composite film sheet, and then the composite film sheet is integrally disposed between two adjacent surfaces of the first lens 3 and the second lens 4. A rear surface of the first lens 3 and the first polarizer 8 are cemented by the adhesive layer 7. A front surface of the second lens 4 is connected to the first phase retarder 10. The first phase retarder 10 may be mounted on the front surface of the second lens 4, or may be formed on the front surface of the second lens 4 by plating.

It should be noted that surfaces of the first lens 3 and the second lens 4 close to the diaphragm 2 are both front surfaces, and surfaces of the first lens 3 and the second lens 4 close to the display screen 5 are both rear surfaces.

In some examples of the present application, the display screen 5 is configured to be capable of emitting a circularly polarized light or a natural light. When a light emitted by the display screen 5 is the natural light, a second polarizer 13 is disposed on a light emitting surface of the display screen 5, a second phase retarder 12 is stacked on a side of the second polarizer 13 away from the display screen 5, and the second polarizer 13 and the second phase retarder 12 form a stacked element for converting the natural light into the circularly polarized light.

The light splitting element 11 is located between the first phase retarder 10 and the second phase retarder 12.

It should be noted that the incident light entering the lens group should be the circularly polarized light.

When the display screen 5 emits the natural light, the natural light needs to be first converted into a polarization state, so that the natural light is first converted into the circularly polarized light and then enters the lens group on the left, and finally a light 6 emitted by the lens group enters the diaphragm 2 (that is, human eyes) for imaging.

The device for converting the natural light into the circularly polarized light is the above-mentioned stacked element.

Optionally, a screen protective glass may be disposed on the light emitting surface of the display screen 5. The screen protection glass can protect the display screen 5. At this time, the light emitted from the display screen 5 is transmitted through the screen protective glass and then enters the stacked element to change the polarization state of the light.

According to the foregoing example, the second phase retarder 12 and the second polarizer 13 may be mounted on the light emitting surface of the display screen 5 to reduce the assembly difficulty.

The second polarizer 13 is, for example, a linear polarizer, and its transmission axis direction may be along a horizontal direction, a vertical direction or any other direction.

The second phase retarder 12 is, for example, a quarter-wave plate, which can convert the linearly polarized light into the circularly polarized light and convert the circularly polarized light into the linearly polarized light.

Specifically, an included angle between a fast axis or slow axis direction of the second phase retarder 12 on a side close to the display screen 5 and the transmission axis direction of the second polarizer 13 is 45°.

According to the optical module provided in the embodiment of the present application, the second phase retarder 12 on the side close to the display screen 5 is located between the second polarizer 13 and the light splitting element 11. The light splitting element 11 is located between the first phase retarder 10 and the second phase retarder. The first phase retarder 10 (on the side away from the display screen 5) is located between the light splitting element 11 and the polarization reflector 9.

Alternatively, polarizers, phase retarders, polarization reflectors may be attached to flat, spherical, aspherical, cylindrical, freeform, and other forms of curved surfaces.

The display screen 5 may be a self-luminous screen such as LCD, LED, OLED, Micro-OLED, and ULED, or a reflective screen such as DMD.

Referring to FIG. 1, the light propagation process of the optical module is as follows:
The light 6 emitted by the display screen 5 passes through the second polarizer 13 to become horizontal linearly polarized light, passes through the second phase retarder 12 to become left-handed or right-handed circularly polarized light, passes through the light splitting element 11, the second lens 4, and the first phase retarder 10 to become horizontal linearly polarized light; then is reflected by the polarization reflector 9 to become horizontal linearly polarized light, then passes through the first phase retarder 10 and the second lens 4 to become left-handed or right-handed circularly polarized light, is reflected by the light splitting element 11 to form right-handed or left-handed circularly polarized light, passes through the second lens 4 and the first phase retarder 10 again to become vertical linearly polarized light, then passes through the polarization reflector 9, the first polarizer 8, the adhesive layer 7, and the first lens 3 to enter the diaphragm 2 for imaging.

The following describes optical performance of the optical module provided in the embodiments of the present application through Embodiment 1 to Embodiment 3.

### Embodiment 1

Referring to FIG. 1, FIG. 1 shows an optical architecture of an optical module according to Embodiment 1 of the present application, including a first lens 3 and a second lens 4 that are cemented, a display screen 5 disposed on one side of the second lens 4, and a diaphragm located on one side of the first lens 3; wherein the first lens 3 and the second lens 4 are disposed adjacent to each other along a same optical axis, and a first polarizer 8, a polarization reflector 9, a first phase retarder 10, and a light splitting element 11 are sequentially disposed between the first lens 3 and the second lens 4; and a second phase retarder 12 and a second polarizer 13 are disposed on a light emitting surface of the display screen 5.

A sagittal height H of a surface (a rear surface) of the second lens 4 close to the display screen 5 is 5.9 mm, a center thickness T₂ of the second lens 4 is 9.6 mm, and a ratio of the two is 0.61.

A ratio of the center thickness T₂ of the second lens 4 to a width (or length) of the light emitting region of the display screen 5 is 0.38.

Table 1 shows optical parameters of the optical module, which are specifically as follows.

**Table 1**

| Component | Materi als | Surface | Thickne ss/ Spacing mm | Radius of curvature mm | Fourth-order Aspheric Coefficients | Sixth-order Aspheric Coefficients | Eighth-order Aspheric Coefficients |
|---|---|---|---|---|---|---|---|
| Diaphragm 2 | / | / | 14 | Inf | / | / | / |
| First Lens 3 | APEL | Front Surface | 4.9 | 1210.0 | 2.66 E-005 | -1.27 E-007 | 3.10 E-010 |
| | | Rear Surface | 0 | -47.0 | 2.44 E-005 | -3.92 E-008 | 6.40 E-011 |
| Adhesive Layer 7 | / | Front Surface | 0.5 | -47.0 | 2.44 E-005 | -3.92 E-008 | 6.40 E-011 |
| | | Rear Surface | 0 | -47.0 | 2.44 E-005 | -3.92 E-008 | 6.40 E-011 |
| First Polarizer 8 | / | Front Surface | 0.1 | -47.0 | 2.44 E-005 | -3.92 E-008 | 6.40 E-011 |
| | | Rear Surface | 0 | -47.0 | 2.44 E-005 | -3.92 E-008 | 6.40 E-011 |
| Polarization Reflector 9 | / | Front Surface | 0.08 | -47.0 | 2.44 E-005 | -3.92 E-008 | 6.40 E-011 |
| | | Rear Surface | 0 | -47.0 | 2.44 E-005 | -3.92 E-008 | 6.40 E-011 |
| First phase retarder 10 | / | Front Surface | 0.08 | -47.0 | 2.44 E-005 | -3.92 E-008 | 6.40 E-011 |
| | | Rear Surface | 0 | -47.0 | 2.44 E-005 | -3.92 E-008 | 6.40 E-011 |
| Second Lens 4 | APEL | Front Surface | 9.6 | -47.0 | 2.44 E-005 | -3.92 E-008 | 6.40 E-011 |
| | | Rear Surface | 1.5 | -36.8 | -5.03 E-006 | 6.189 E-009 | -1.10 E-011 |
| Second phase retarder 12 | / | Front Surface | 0.08 | Inf | / | / | / |
| | | Rear Surface | 0 | Inf | / | / | / |
| Second Polarizer 13 | / | Front Surface | 0.08 | Inf | / | / | / |
| | | Rear Surface | 0.5 | Inf | / | / | / |
| Display Screen 5 | / | Front Surface | 0 | Inf | / | / | / |

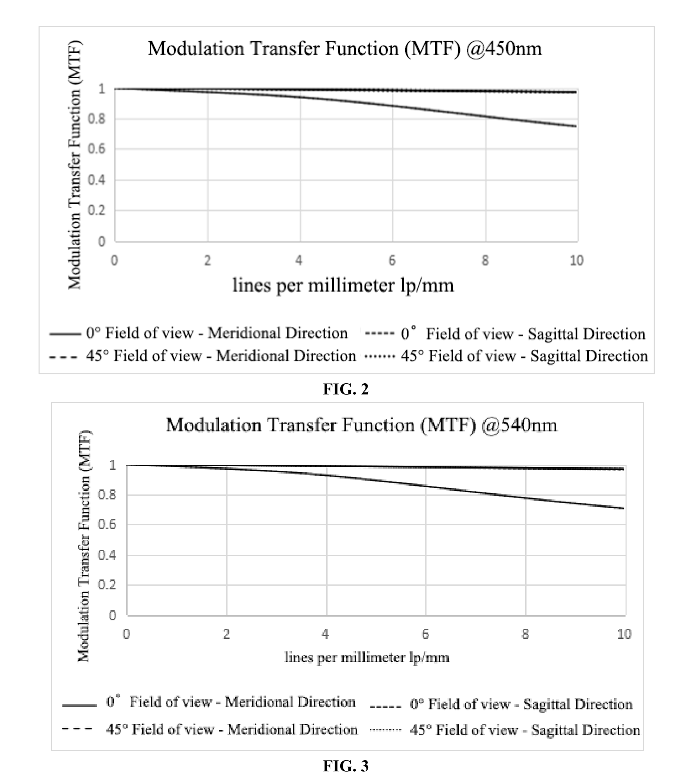

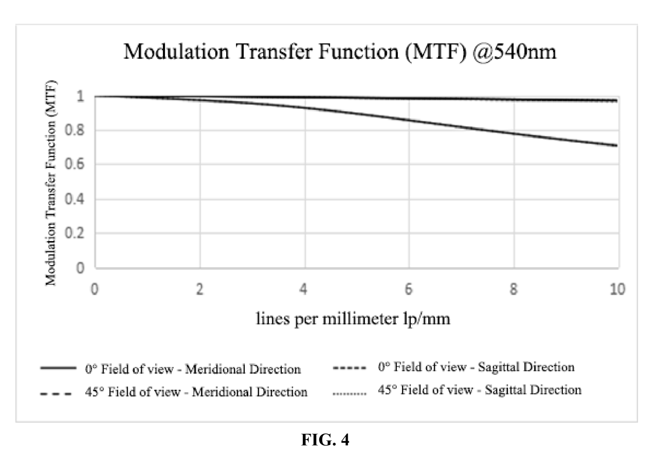

FIG. 2 to FIG. 4 show the modulation transfer function (MTF) curves of the optical module in Embodiment 1 at 450 nm, 540 nm, and 610 nm, respectively. It can be seen from FIG. 2 to FIG. 4 that at a spatial frequency of 10 lp/mm, the MTF value of the optical module is higher than 0.7 at 450 nm wavelength, the MTF value of the optical module is higher than 0.7 at 540 nm wavelength, and the MTF value of the optical module is higher than 0.6 at 610 nm wavelength.

### Embodiment 2

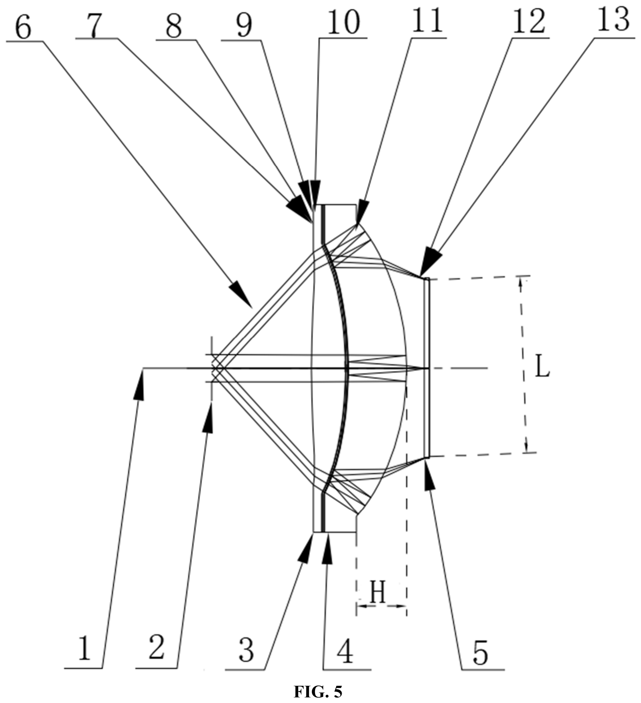

Referring to FIG. 5, FIG. 5 shows an optical architecture of an optical module according to Embodiment 2 of the present application, including a first lens 3 and a second lens 4 that are cemented, a display screen 5 disposed on one side of the second lens 4, and a diaphragm located on one side of the first lens 3; wherein the first lens 3 and the second lens 4 are disposed adjacent to each other along a same optical axis, and a first polarizer 8, a polarization reflector 9, a first phase retarder 10, and a light splitting element 11 are sequentially disposed between the first lens 3 and the second lens 4; and a second phase retarder 12 and a second polarizer 13 are disposed on a light emitting surface of the display screen 5.

A sagittal height H of a surface (a rear surface) of the second lens 4 close to the display screen 5 is 7 mm, a center thickness T₂ of the second lens 4 is 8.5 mm, and a ratio of the two is 0.82.

A ratio of the center thickness T₂ of the second lens 4 to a width (or length) of the light emitting region of the display screen 5 is 0.34.

Table 2 shows optical parameters of the optical module, which are specifically as follows.

**Table 2**

| Component | Materi als | Surface | Thickne ss/ Spacing mm | Radius of curvature mm | Fourth-order Aspheric Coefficients | Sixth-order Aspheric Coefficients | Eighth-order Aspheric Coefficients |
|---|---|---|---|---|---|---|---|
| Diaphragm 2 | / | / | 14 | Inf | / | / | / |
| First Lens 3 | APEL | Front Surface | 5.0 | 124.0 | -6.38 E-005 | -1.97 E-008 | 1.12 E-011 |
| | | Rear Surface | 0 | -62.0 | -7.30 E-008 | -1.50 E-008 | 2.13 E-010 |
| Adhesive Layer 7 | / | Front Surface | 0.5 | -62.0 | -7.30 E-008 | -1.50 E-008 | 2.13 E-010 |
| | | Rear Surface | 0 | -62.0 | -7.30 E-008 | -1.50 E-008 | 2.13 E-010 |
| First Polarizer 8 | / | Front Surface | 0.1 | -62.0 | -7.30 E-008 | -1.50 E-008 | 2.13 E-010 |
| | | Rear Surface | 0 | -62.0 | -7.30 E-008 | -1.50 E-008 | 2.13 E-010 |
| Polarization Reflector 9 | / | Front Surface | 0.08 | -62.0 | -7.30 E-008 | -1.50 E-008 | 2.13 E-010 |
| | | Rear Surface | 0 | -62.0 | -7.30 E-008 | -1.50 E-008 | 2.13 E-010 |
| First phase retarder 10 | / | Front Surface | 0.08 | -62.0 | -7.30 E-008 | -1.50 E-008 | 2.13 E-010 |
| | | Rear Surface | 0 | -62.0 | -7.30 E-008 | -1.50 E-008 | 2.13 E-010 |
| Second Lens 4 | APEL | Front Surface | 8.5 | -62.0 | -7.30 E-008 | -1.50 E-008 | 2.13 E-010 |
| | | Rear Surface | 2.5 | -38.4 | -4.83 E-006 | -3.52 E-009 | 5.15 E-012 |
| Second phase retarder 12 | / | Front Surface | 0.08 | Inf | / | / | / |
| | | Rear Surface | 0 | Inf | / | / | / |
| Second Polarizer 13 | / | Front Surface | 0.08 | Inf | / | / | / |
| | | Rear Surface | 0.5 | Inf | / | / | / |
| Display Screen 5 | / | Front Surface | 0 | Inf | / | / | / |

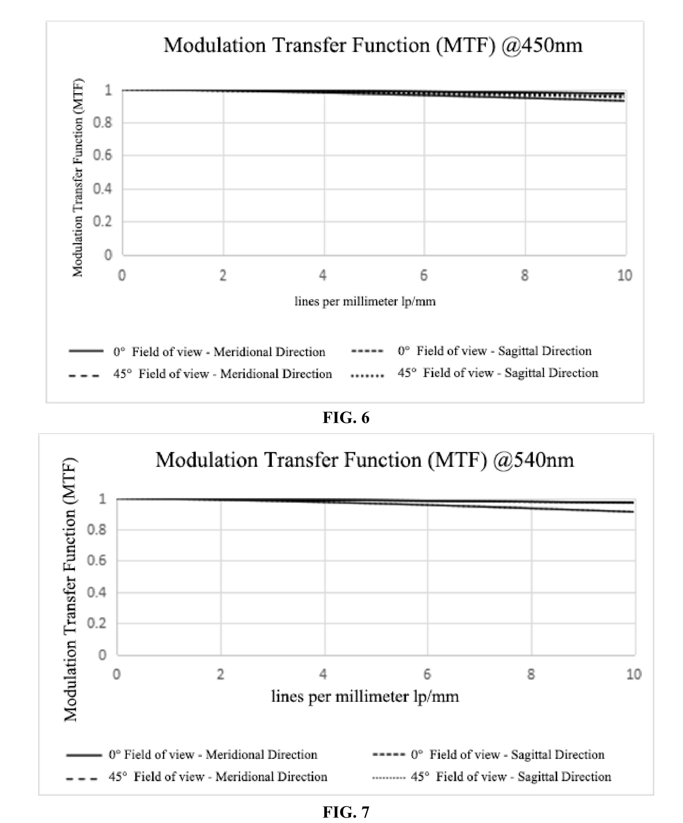

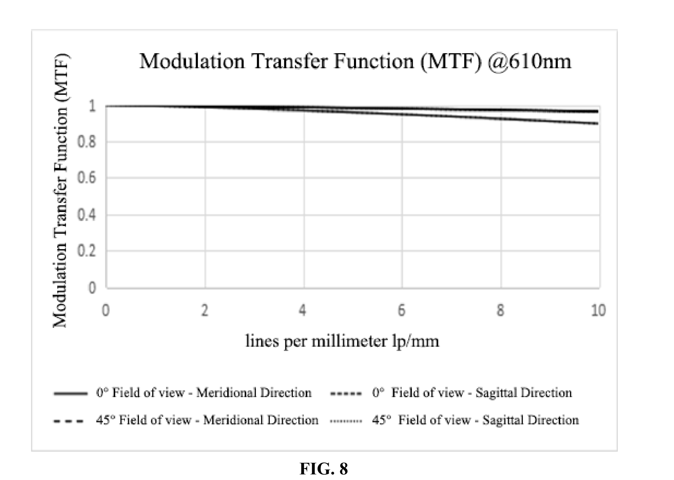

FIG. 6 to FIG. 8 show the modulation transfer function (MTF) curves of the optical module in Embodiment 2 at 450 nm, 540 nm, and 610 nm, respectively. It can be seen from FIG. 6 to FIG. 8 that at a spatial frequency of 10 lp/mm, the MTF value of the optical module is higher than 0.9 at 450 nm wavelength, the MTF value of the optical module is higher than 0.9 at 540 nm wavelength, and the MTF value of the optical module is higher than 0.9 at 610 nm wavelength.

### Embodiment 3

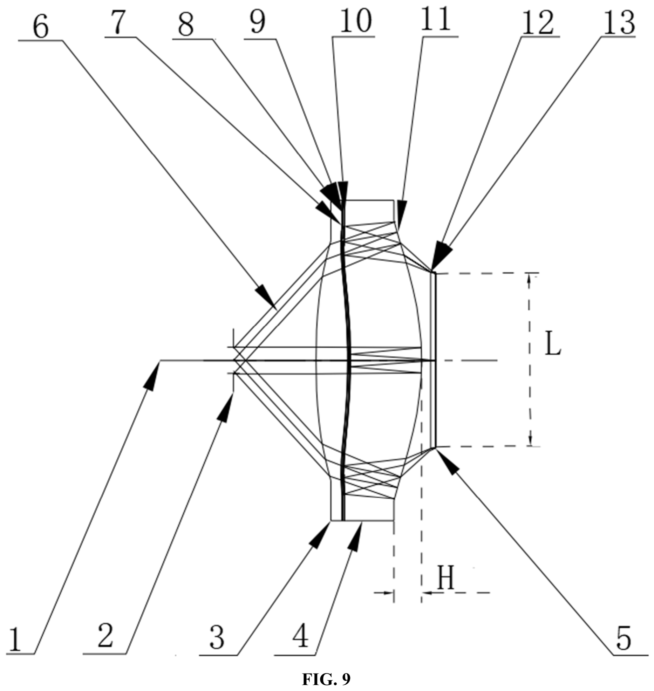

Referring to FIG. 9, FIG. 9 shows an optical architecture of an optical module according to Embodiment 3 of the present application, including a first lens 3 and a second lens 4 that are cemented, a display screen 5 disposed on one side of the second lens 4, and a diaphragm located on one side of the first lens 3; wherein the first lens 3 and the second lens 4 are disposed adjacent to each other along a same optical axis, and a first polarizer 8, a polarization reflector 9, a first phase retarder 10, and a light splitting element 11 are sequentially disposed between the first lens 3 and the second lens 4; and a second phase retarder 12 and a second polarizer 13 are disposed on a light emitting surface of the display screen 5.

A sagittal height H of a surface (a rear surface) of the second lens 4 close to the display screen 5 is 4 mm, a center thickness T₂ of the second lens 4 is 10.6 mm, and a ratio of the two is 0.38.

A ratio of the center thickness T₂ of the second lens 4 to a width (or length) of the light emitting region of the display screen 5 is 0.41.

Table 3 shows optical parameters of the optical module, which are specifically as follows.

**Table 3**

| Component | Materi als | Surface | Thickne ss/ | Radius of curvature mm | Fourth-order | Sixth-order Aspheric Coefficients | Eighth-order Aspheric Coefficients |
|---|---|---|---|---|---|---|---|
| | | | Spacing mm | | Aspheric Coefficients | | |
| Diaphragm 2 | / | / | 14 | Inf | / | / | / |
| First Lens 3 | APEL | Front Surface | 4.8 | 114.0 | -8.42 E-006 | -8.88 E-009 | -5.73 E-011 |
| | | Rear Surface | 0 | -85.0 | 1.04 E-005 | -3.69 E-008 | 3.18 E-010 |
| Adhesive Layer 7 | / | Front Surface | 0.5 | -85.0 | 1.04 E-005 | -3.69 E-008 | 3.18 E-010 |
| | | Rear Surface | 0 | -85.0 | 1.04 E-005 | -3.69 E-008 | 3.18 E-010 |
| First Polarizer 8 | / | Front Surface | 0.1 | -85.0 | 1.04 E-005 | -3.69 E-008 | 3.18 E-010 |
| | | Rear Surface | 0 | -85.0 | 1.04 E-005 | -3.69 E-008 | 3.18 E-010 |
| Polarization Reflector 9 | / | Front Surface | 0.08 | -85.0 | 1.04 E-005 | -3.69 E-008 | 3.18 E-010 |
| | | Rear Surface | 0 | -85.0 | 1.04 E-005 | -3.69 E-008 | 3.18 E-010 |
| First phase retarder 10 | / | Front Surface | 0.08 | -85.0 | 1.04 E-005 | -3.69 E-008 | 3.18 E-010 |
| | | Rear Surface | 0 | -85.0 | 1.04 E-005 | -3.69 E-008 | 3.18 E-010 |
| Second Lens 4 | APEL | Front Surface | 10.6 | -85.0 | 1.04 E-005 | -3.69 E-008 | 3.18 E-010 |
| | | Rear Surface | 1.3 | -45.4 | 1.64 E-006 | -8.97 E-010 | 2.27 E-011 |
| Second phase retarder 12 | / | Front Surface | 0.08 | Inf | / | / | / |
| | | Rear Surface | 0 | Inf | / | / | / |
| Second Polarizer 13 | / | Front Surface | 0.08 | Inf | / | / | / |
| | | Rear Surface | 0.5 | Inf | / | / | / |
| Display Screen 5 | / | Front Surface | 0 | Inf | / | / | / |

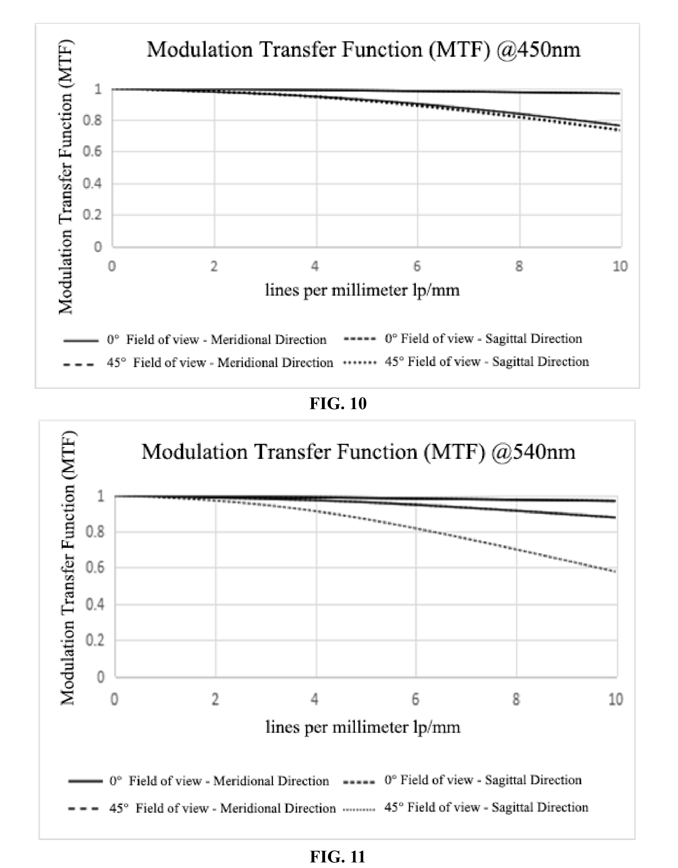

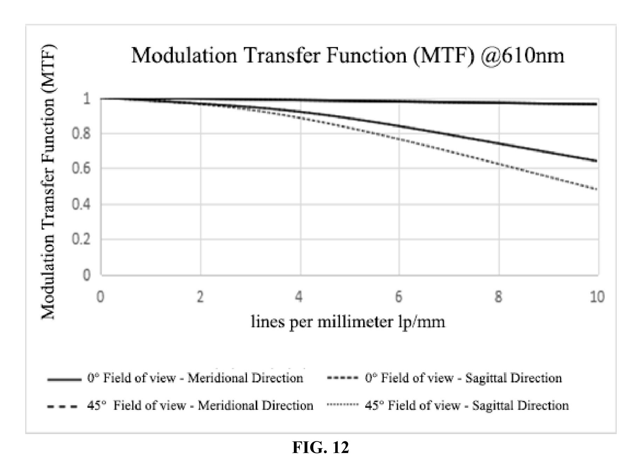

FIG. 10 to FIG. 12 show the modulation transfer function (MTF) curves of the optical module in Embodiment 3 at 450 nm, 540 nm, and 610 nm, respectively. It can be seen from FIG. 10 to FIG. 12 that at a spatial frequency of 10 lp/mm, the MTF value of the optical module is higher than 0.7 at 450 nm wavelength, the MTF value of the optical module is higher than 0.55 at 540 nm wavelength, and the MTF value of the optical module is higher than 0.5 at 610 nm wavelength.

According to another embodiment of the present application, a head-mounted display device is provided. The head-mounted display device includes a housing and the optical module as described above.

The head-mounted display device includes VR smart glasses or a VR smart helmet, which is not limited in the embodiments of the present application.

The specific implementation of the head-mounted display device of the embodiment of the present application can refer to the above embodiments of the optical module, and therefore has at least all the beneficial effects brought by the technical solutions of the above embodiments, which will not be repeated here.

The above embodiments focus on the differences between the embodiments, and the different optimization features between the embodiments can be combined to form a better embodiment as long as they are not contradictory, which will not be repeated here in view of the brevity of the text.

Although some specific embodiments of the present application have been described in detail through examples, those skilled in the art should understand that the above examples are only for illustration, and are not intended to limit the scope of the present application. Those skilled in the art should understand that the above embodiments may be modified without departing from the scope and spirit of the present application. The scope of the present application is defined by the appended claims.

## Claims

1. An optical module, comprising a lens group, and a light splitting element (11), a first phase retarder (10) and a polarization reflector (9) disposed between optical paths of the lens group, wherein the first phase retarder (10) is located between the light splitting element (11) and the polarization reflector (9);
wherein the lens group comprises a first lens (3) and a second lens (4) adhered to each other, and the first lens (3) and the second lens (4) are disposed adjacent to each other along a same optical axis (1); and
a ratio H/T₂ of a sagittal height H of a surface of the second lens (4) away from the first lens (3) to a center thickness T₂ of the second lens (4) satisfies: 0.38≤ H/T₂ ≤ 0.82.

2. The optical module according to claim 1, wherein a surface of the second lens (4) adjacent to the first lens (3) is a concave surface or a reverse curved surface; and
a surface of the first lens (3) adjacent to the second lens (4) is a convex surface or a reverse curved surface.

3. The optical module according to claim 2, wherein a surface of the second lens (4) away from the first lens (3) is a convex surface.

4. The optical module according to any one of claims 1-3, wherein the optical module further comprises a display screen (5), the display screen (5) is located on a side of the second lens (4) away from the first lens (3), and a ratio T₂/L of the center thickness T₂ of the second lens (4) to an aperture L of a light emitting region of the display screen (5) satisfies: 0.2≤ T₂/L ≤ 0.5.

5. The optical module according to claim 1, wherein a total length TTL of the optical module is less than 25 mm, and a MTF value of the optical module is greater than 0.5.

6. The optical module according to claim 1, wherein an effective focal length of the optical module is 13 mm to 23 mm.

7. The optical module according to claim 4, wherein the light splitting element (11) is disposed on a surface of the second lens (4) close to the display screen (5); and
the first phase retarder (10) is disposed on a surface of the second lens (4) away from the display screen (5), and the polarization reflector (9) is stacked on a side of the first phase retarder (10) away from the second lens (4).

8. The optical module according to claim 7, wherein the optical module further comprises a first polarizer (8), and the first polarizer (8) is disposed on a side of the polarization reflector (9) away from the first phase retarder (10); and
the first polarizer (8) is adhered to the first lens (3) through an adhesive layer (7).

9. The optical module according to claim 4, wherein the display screen (5) is configured to be capable of emitting a circularly polarized light or a natural light; and
when a light emitted by the display screen (5) is the natural light, a second polarizer (13) is disposed on a light emitting surface of the display screen (5), a second phase retarder (12) is stacked on a side of the second polarizer (13) away from the display screen (5), and the second polarizer (13) and the second phase retarder (12) form a stacked element for converting the natural light into the circularly polarized light.

10. The optical module according to claim 9, wherein the light splitting element (11) is located between the first phase retarder (10) and the second phase retarder (12).

11. A head-mounted display device, comprising:
a housing; and
the optical module according to any one of claims 1-10.
